# EUROPÄISCHE PATENTSCHRIFT

(11) **EP 1 473 139 B1**
(45) Veröffentlichungstag und Bekanntmachung des Hinweises auf die Patenterteilung: **24.05.2006**
(21) Anmeldenummer: 04006157.4
(22) Anmeldetag: 16.03.2004
(51) Int. Cl.: B29C 49/56

(54) **Verfahren und Vorrichtung zur Blasformung von Behältern**
Method and apparatus for blow moulding containers
Procédé et appareil de formage de récipients par soufflage

(30) Priorität: 24.04.2003 DE 10318556
(43) Veröffentlichungstag der Anmeldung: 03.11.2004
(73) Patentinhaber: SIG Technology Ltd., 8212 Neuhausen Rhine Falls (CH)
(72) Erfinder: Linke, Michael, 22926 Ahrensburg (DE); Choinski, Julian, 22359 Hamburg (DE)
(74) Vertreter: Klickow, Hans-Henning

(56) Entgegenhaltungen:
- US-A- 3 825 396
- US-A- 4 083 910
- US-A- 4 626 190
- PATENT ABSTRACTS OF JAPAN Bd. 2000, Nr. 14, 5. März 2001 (2001-03-05) & JP 2000 313017 A (TOYO SEIKAN KAISHA LTD), 14. November 2000 (2000-11-14)

## Beschreibung

Die Erfindung betrifft ein Verfahren zur Blasformung von Behältern, bei dem Vorformlinge aus einem thermoplastischen Material temperiert und anschließend innerhalb einer Blasform durch Einwirkung eines unter Druck stehenden Mediums zu Behältern umgeformt werden und bei dem die aus mindestens zwei Blasformsegmenten bestehende Blasform von Formträgern einer Blasstation positioniert wird sowie bei dem die Blasformsegmente in einem geschlossenen Zustand der Blasstation entlang einer Trennebene angeordnet und relativ zueinander verriegelt werden, sowie bei dem mindestens ein Verriegelungselement zur Durchführung der Verriegelung mindestens teilweise quer zur Trennebene positioniert wird.

Die Erfindung betrifft darüber hinaus eine Vorrichtung zur Blasformung von Behältern, die mindestens eine Blasstation zur Umformung von thermoplastischen Vorformlingen in die Behälter aufweist und bei der die Blasstation mit mindestens zwei von Formträgern gehalterten Blasformsegmenten versehen ist, sowie bei der die Blasformsegmente in einen geschlossenen Zustand der Blasstation entlang einer Trennebene angeordnet und von mindestens einem Verriegelungselement relativ zueinander fixiert sind, sowie bei der das Verriegelungselement mindestens teilweise quer zur Trennebene positionierbar angeordnet ist.

Bei einer derartigen Behälterformung durch Blasdruckeinwirkung werden Vorformlinge aus einem thermoplastischen Material, beispielsweise Vorformlinge aus PET (Polyethylenterephtalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE - OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Aufgrund von bei der Blasformung der Vorformlinge in die Behälter auf die Blasstation einwirkender erheblicher Innendrücke ist es erforderlich, eine ungewollte Öffnung der Blasformsegmente bei der Durchführung des Blasformvorganges zu verhindern. Hierzu erfolgt in der Regel eine Verriegelung der Blasformsegmente relativ zueinander durch mechanische Verriegelungselemente. Typischerweise bestehen derartige Verriegelungselemente aus ösenartigen Halterungselementen und Verriegelungsbolzen, die in die Ösen einführbar sind.

Ein Problem bei der Verwendung der bekannten Verriegelungselemente besteht darin, daß die Verriegelungsbolzen und die Verriegelungsösen in einem geöffneten Zustand der Blasstation in den Öffnungsraum hineinragen, der für eine Entnahme der geblasenen Flaschen bzw. ein Einsetzen der vorformlinge benötigt wird. Es ist somit erforderlich, die Blasstationen derart weit zu öffnen, daß die Behälter und die Vorformlinge kollisionsfrei an den Verriegelungselementen vorbeigeführt werden können. Diese Anforderungen führen dazu, daß die Blasstationen relativ zueinander mit einem größeren Abstand angeordnet werden müssen, als dies ohne Verwendung der bisherigen Verriegelungselemente erforderlich wäre.

Aus der US-A-4,083,910 sind bereits ein Verfahren und eine Vorrichtung zur Blasfortnung von Behältern bekannt, bei denen die Vorformlinge innerhalb einer Blasform hergestellt werden, die aus zwei Blasformsegmenten besteht. Die Blasformsegmente werden von relativ zueinander verriegelbaren Formträgern gehaltert. Die Verriegelung der Formträger relativ zueinander erfolgt unter Verwendung von verschwenkbar angeordneten Verriegelungselementen, die im verriegelungszustand ein zugeordnetes Gegenelement formschlüssig hintergreifen. Das Gegenelement ist starr mit einem der Formträger verbunden und erstreckt sich bereichsweise neben dem zweiten Formträger. Das Verriegelungselement ist verschwenkbar am zweiten Formträger gelagert und erstreckt sich bereichsweise neben dem ersten Formträger.

Aus der US-A-4,626,190 ist ebenfalls ein Formträger bekannt, bei dem im Bereich des einen Formträgers ein verschwenkbar angeordnetes verriegelungselement positioniert ist. Das Verriegelungselement erstreckt sich bereichsweise im Verriegelungszustand neben dem zugeordneten Gegenelement und wird lediglich soweit bewegt, daß zur Entriegelung ein Formschluß aufgehoben wird.

Aufgabe der vorliegenden Erfindung ist es, ein Verfahren der einleitend genannten Art derart zu verbessern, daß eine Anordnung der Blasstationen relativ zueinander mit einem geringen Abstand unterstützt wird.

Diese Aufgabe wird erfindungsgemäß dadurch gelöst, daß das Verriegelungselement aus einem Distanzbereich herausbewegt wird, der sich in einem geöffneten Zustand der Blasstation zwischen den Formträgern erstreckt.

Weitere Aufgabe der vorliegenden Erfindung ist es, eine Vorrichtung der einleitend genannten Art derart zu konstruieren, daß eine kompakte Konstruktion der Blasmaschine erreicht wird.

Diese Aufgabe wird erfindungsgemäß dadurch gelöst, daß das verriegelungselement in einem geöffneten Zustand der Blasstation aus einem Distanzbereich zwischen den Formträgern heraus bewegbar angeordnet ist.

Durch die quer zur Trennebene positionierbare Anordnung des Verriegelungselementes sowie durch die Ausführung der zugehörigen Positionierbewegung ist es möglich, das Verriegelungselement in einem geöffneten Zustand der Blasstation aus dem Öffnungsraum zwischen den Blasformsegmenten herauszuführen. Hierdurch brauchen die Blasformsegmente lediglich derart weit voneinander entfernt zu werden, daß der geblasene Behälter entnehmbar ist bzw. ein Positionierelement für den geblasenen Behälter oder den Vorformling an den Blasformsegmenten vorbeigeführt werden kann. Bei einer positionierbaren Anordnung der Verriegelungselemente derart, daß diese vollständig aus dem Bereich des Öffnungsraumes herausgeführt werden können, ergibt sich bei verschwenkbaren Blasformhälften eine Verringerung des erforderlichen Öffnungswinkels von etwa 20° und hierdurch bei einer üblichen Dimensionierung der Blasstationen eine Verringerung des erforderlichen Bewegungsraumes von etwa zehn Zentimeter.

Bei einer Anordnung der Blasstation auf einem rotierenden Blasrad können somit auf einer vorgegebenen Blasradgröße erheblich mehr Blasstationen angeordnet werden bzw. eine vorgegebene Anzahl von Blasstationen kann auf einem deutlich verkleinerten Blasrad positioniert werden. Hieraus ergeben sich erhebliche kinematische Vorteile im Hinblick auf die auftretenden Drehmomente bzw. Trägheitsmomente.

Eine gleichmäßige Kraftaufnahme entlang der Trennebene wird dadurch unterstützt, daß das Verriegelungselement um eine im wesentlichen vertikal verlaufende Drehachse herum verschwenkbar angeordnet ist.

Eine andere Konstruktionsvariante besteht darin, daß das Verriegelungselement um eine im wesentlichen horizontal verlaufende Drehachse herum verschwenkbar angeordnet ist.

Ebenfalls kann eine kompakte Anordnung dadurch realisiert werden, daß das Verriegelungselement quer zur Trennebene verschieblich angeordnet ist.

Die Durchführung einer optimalen Bewegungskinematik wird dadurch unterstützt, daß das Verriegelungselement mindestens bereichsweise unterschiedlich zum zugeordneten Träger quer zur Trennebene positionierbar angeordnet ist. Hierdurch ist es möglich, daß das Verriegelungselement sowie der Träger bei der Durchführung von Öffnungs- und Schließbewegungen unterschiedliche Bewegungsbahnen durchlaufen.

Eine reproduzierbare Durchführung der Bewegungsvorgänge bei gleichzeitig robuster mechanischer Gestaltung kann dadurch unterstützt werden, daß das Verriegelungselement kurvengesteuert positionierbar ist.

Bei einer Realisierung des positionierbaren Verriegelungselementes ist insbesondere daran gedacht, daß das verriegelungselement in einem geöffneten Zustand der Blasstation aus einem Distanzbereich zwischen den Formträgern heraus bewegbar angeordnet ist.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität und
- Fig. 5: eine geschnittene teilweise Darstellung einer Blasstation mit quer zur Trennebene positionierbarem Verriegelungselement.

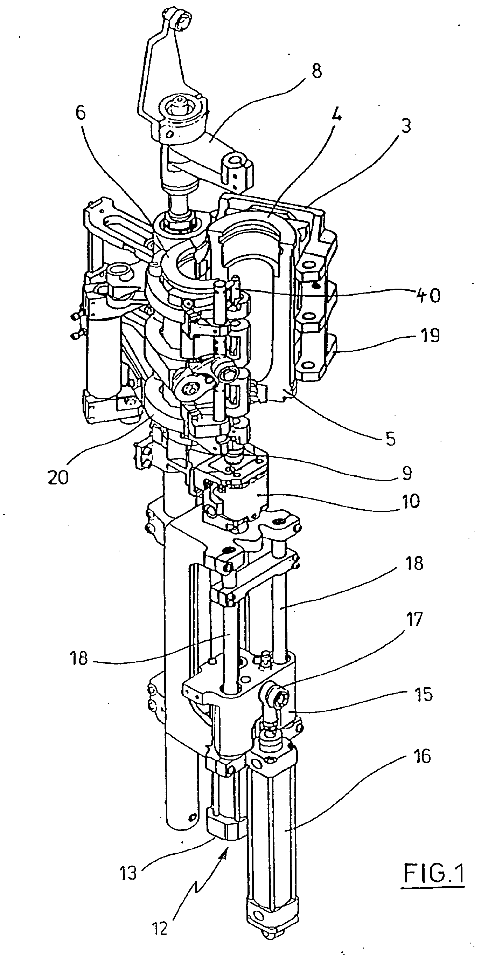

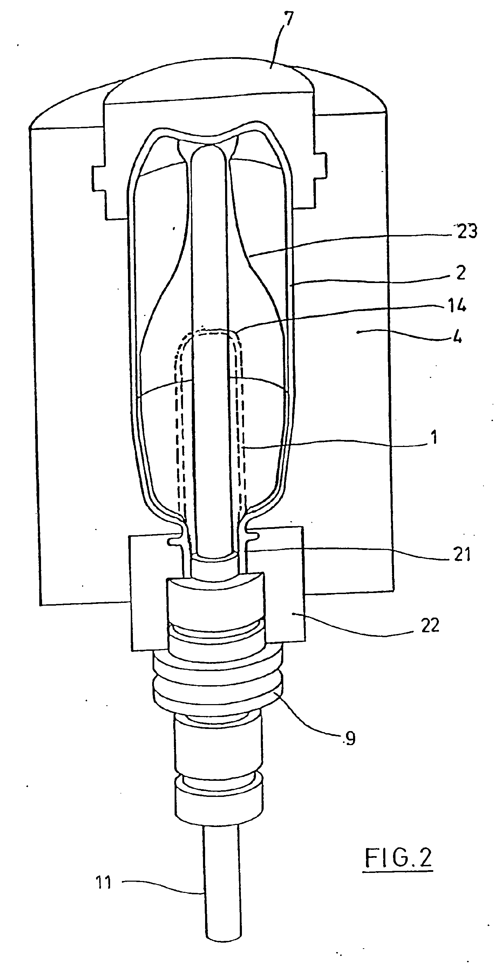

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt mit Hilfe einer Reckstange (11), die von einem Zylinder (12) positioniert wird. Grundsätzlich ist es aber auch denkbar, eine mechanische Positionierung der Reckstange (11) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind. Eine Verwendung von Zylindern (12) ist zweckmäßig, wenn ortsfest angeordnete Blasstationen (3) vorgesehen sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (40).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

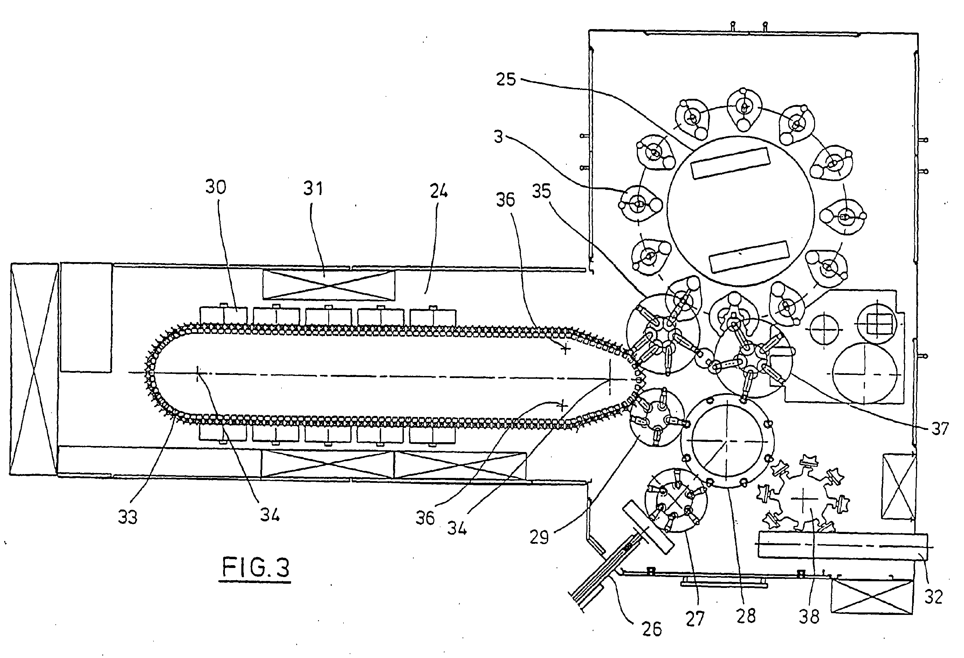

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

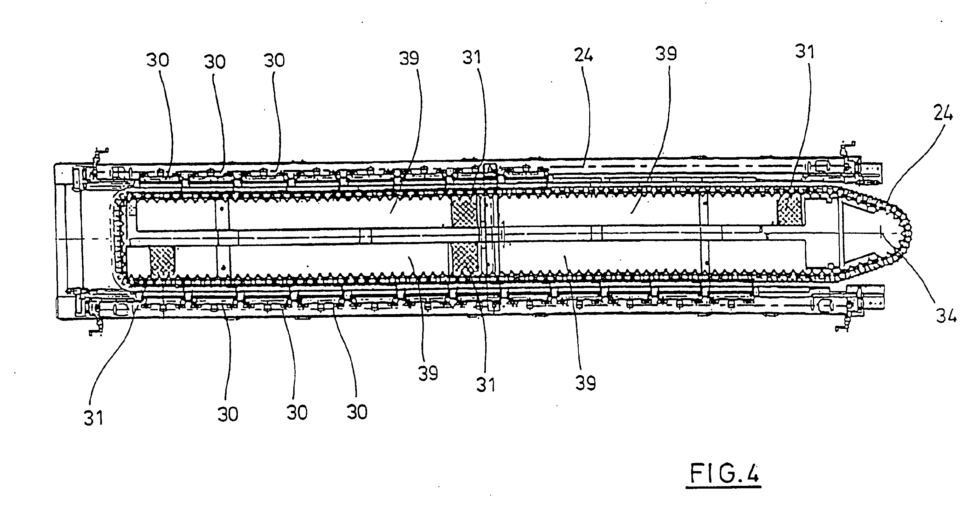

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

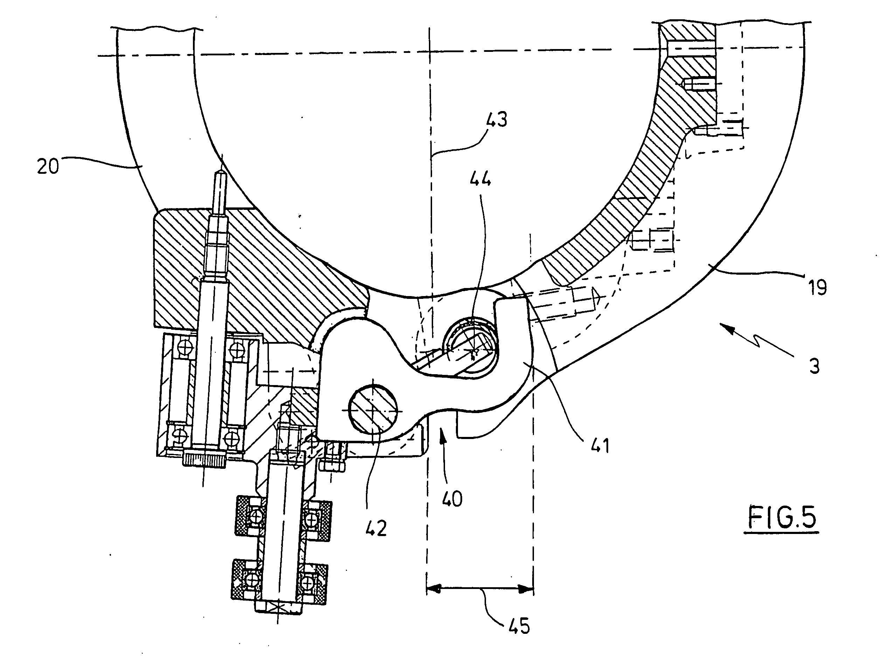

Figur 5 zeigt in einer stark vergrößerten Darstellung den Aufbau der Verriegelungseinrichtung (40). Beim dargestellten Ausführungsbeispiel ist ein verriegelungselement (41) relativ zu einem Schwenklager (42) drehbeweglich angeordnet. Eine Drehbewegung des Verriegelungselementes (41) relativ zum Schwenklager (42) führt zu einer Bewegungskomponente des Verriegelungselementes (41) quer zu einer Trennebene (43) zwischen den Formhälften (5, 6). In einem verriegelten Zustand umfaßt das Verriegelungselement (41) teilweise ein Gegenelement (44), so daß die Träger (19, 20) in diesem verriegelten Zustand relativ zueinander unbeweglich angeordnet sind.

Typischerweise kann zur Durchführung einer Positionierbewegung des Verriegelungselementes (41) eine Kurvensteuerung verwendet werden. Dadurch, daß das Verriegelungselement (41) relativ zum Träger (20) beweglich angeordnet ist, wird erreicht, daß bei einer Öffnung der Blasstation (3) eine um die Distanz (45) verringerte Öffnungsbewegung der Träger (19, 20) durchgeführt werden muß, da das Verriegelungselement (41) bei der Durchführung seiner Positionierbewegung diesen Bereich freigibt.

## Patentansprüche

1. Verfahren zur Blasformung von Behältern (2), bei dem Vorformlinge (1) aus einem thermoplastischen Material temperiert und anschließend innerhalb einer Blasform (4) durch Einwirkung eines unter Druck stehenden Mediums zu Behältern (2) umgeformt werden und bei dem die aus mindestens zwei Blasformsegmenten bestehende Blasform (4) von Formträgern (19, 20) einer Blasstation (3) positioniert wird sowie bei dem die Blasformsegmente in einem geschlossenen Zustand der Blasstation (3) entlang einer Trennebene (43) angeordnet und relativ zueinander verriegelt werden, sowie bei dem mindestens ein Verriegelungselement (41) zur Durchführung der Verriegelung mindestens teilweise quer zur Trennebene (43) positioniert wird, **dadurch gekennzeichnet, daß** das Verriegelungselement (41) aus einem Distanzbereich herausbewegt wird, der sich in einem geöffneten Zustand der Blasstation (3) zwischen den Formträgern (19, 20) erstreckt.

2. Verfahren nach Anspruch 1, **dadurch gekennzeichnet, daß** das verriegelungselement (41) in horizontaler Richtung verschwenkt wird.

3. Verfahren nach Anspruch 1, **dadurch gekennzeichnet, daß** das Verriegelungselement (41) in vertikaler Richtung verschwenkt wird.

4. Verfahren nach Anspruch 1, **dadurch gekennzeichnet, daß** das Verriegelungselement (41) quer zur Trennebene (43) verschoben wird.

5. Verfahren nach einem der Ansprüche 1 bis 4, **dadurch gekennzeichnet, daß** das verriegelungselement (41) mindestens zeitweise eine Positionierbewegung quer zur Trennebene (43) abweichend von einer Bewegung des zugeordneten Formträgers (20) durchführt.

6. Vorrichtung zur Blasformung von Behältern (2), die mindestens eine Blasstation (3) zur Umformung von thermoplastischen Vorformlingen (1) in die Behälter (2) aufweist und bei der die Blasstation (3) mit mindestens zwei von Formträgern (19, 20) gehalterten Blasformsegmenten versehen ist, sowie bei der die Blasformsegmente in einen geschlossenen Zustand der Blasstation (3) entlang einer Trennebene (43) angeordnet und von mindestens einem Verriegelungselement (41) relativ zueinander fixiert sind, sowie bei der das Verriegelungselement (41) mindestens teilweise quer zur Trennebene (43) positionierbar angeordnet ist, **dadurch gekennzeichnet, daß** das Verriegelungselement (41) in einem geöffneten Zustand der Blasstation (3) aus einem Distanzbereich zwischen den Formträgern (19, 20) heraus bewegbar angeordnet ist.

7. Vorrichtung nach Anspruch 6, **dadurch gekennzeichnet, daß** das Verriegelungselement (41) um eine im wesentlichen vertikal verlaufende Drehachse herum verschwenkbar angeordnet ist.

8. Vorrichtung nach Anspruch 6, **dadurch gekennzeichnet, daß** das Verriegelungselement (41) um eine im wesentlichen horizontal verlaufende Drehachse herum verschwenkbar angeordnet ist.

9. Vorrichtung nach Anspruch 6, **dadurch gekennzeichnet, daß** das Verriegelungselement (41) quer zur Trennebene (43) verschieblich angeordnet ist.

10. Vorrichtung nach einem der Ansprüche 6 bis 9, **dadurch gekennzeichnet, daß** das verriegelungselement (41) mindestens bereichsweise unterschiedlich zum zugeordneten Träger (20) quer zur Trennebene (43) positionierbar angeordnet ist.

11. Vorrichtung nach einem der Ansprüche 6 bis 10, **dadurch gekennzeichnet, daß** das verriegelungselement (41) kurvengesteuert positionierbar ist.

## Claims

1. Method for blow moulding containers (2), in which the temperature of parisons (1) of a thermoplastic material is regulated and the parisons are then shaped into containers (2) inside a blow mould (4) through the action of a pressurised medium, and in which the blow mould (4), which consists of at least two blow moulding segments, is positioned by mould supports (19, 20) of a blowing station (3), and in which, when the blowing station (3) is in a closed state, the blow moulding segments are disposed along a parting plane (43) and locked relative to one another, and in which at least one locking element (41) for carrying out the locking is positioned at least partly transversely to the parting plane (43), **characterised in that** the locking element (41) is moved out of a distant region which, when the blowing station (3) is in an open state, extends between the mould supports (19, 20).

2. Method according to Claim 1, **characterised in that** the locking element (41) is pivoted in the horizontal direction.

3. Method according to Claim 1, **characterised in that** the locking element (41) is pivoted in the vertical direction.

4. Method according to Claim 1, **characterised in that** the locking element (41) is displaced transversely to the parting plane (43).

5. Method according to any one of Claims 1 to 4, **characterised in that** the locking element (41) executes at least intermittently a positioning movement transversely to the parting plane (43) which differs from a movement of the associated mould support (20)

6. Device for blow moulding containers (2) which comprises at least one blowing station (3) for shaping thermoplastic parisons (1) into the containers (2) and in which the blowing station (3) is provided with at least two blow moulding segments secured by mould supports (19, 20), and in which, when the blowing station (3) is in a closed state, the blow moulding segments are disposed along a parting plane (43) and fixed relative to one another by at least one locking element (41), and in which the locking element (41) is disposed such that it can be positioned at least partly transversely to the parting plane (43), **characterised in that**, when the blowing station (3) is in an open state, the locking element (41) is disposed such that it can be moved out of a distant region between the mould supports (19, 20).

7. Device according to Claim 6, **characterised in that** the locking element (41) is disposed such that it can be pivoted about an axis of rotation which extends substantially vertically.

8. Device according to Claim 6, **characterised in that** the locking element (41) is disposed such that it can be pivoted about an axis of rotation which extends substantially horizontally.

9. Device according to Claim 6, **characterised in that** the locking element (41) is disposed such that it can be displaced transversely to the parting plane (43).

10. Device according to any one of Claims 6 to 9, **characterised in that** the locking element (41) is disposed such that it can be positioned transversely to the parting plane (43) differently from the associated support (20), at least in certain regions.

11. Device according to any one of Claims 6 to 10, **characterised in that** the locking element (41) can be positioned in a cam-controlled manner.

## Revendications

1. Procédé de moulage de récipients (2), dans lequel les ébauches (1) en un matériau thermoplastique sont tempérées et ensuite, formées dans un moule de soufflage (4), par action d'un milieu sous pression, en les récipients (2) et dans lequel le moule de soufflage (4), consistant en au moins deux segments de moule de soufflage, est positionné sur des supports de moule (19, 20) d'un poste de soufflage (3), ainsi que dans lequel les segments de moule de soufflage sont disposés, à l'état fermé du poste de soufflage (3), le long d'un plan de séparation (43) et bloqués l'un par rapport à l'autre, ainsi que dans lequel au moins un élément de blocage (41) pour effectuer le blocage est positionné au moins partiellement transversalement au plan de séparation (43), **caractérisé en ce que** l'élément de blocage (41) est mobile sur un intervalle de distance, qui s'étend entre les supports de moule (19, 20) à l'état ouvert du poste de soufflage (3).

2. Procédé selon la revendication 1, **caractérisé en ce que** l'élément de blocage (41) est balancé en direction horizontale.

3. Procédé selon la revendication 1, **caractérisé en ce que** l'élément de blocage (41) est balancé en direction verticale.

4. Procédé selon la revendication 1, **caractérisé en ce que** l'élément de blocage (41) est déplacé transversalement au plan de séparation (43).

5. Procédé selon l'une des revendications 1 à 4, **caractérisé en ce que** l'élément de blocage (41) réalise au moins de manière temporaire, un mouvement de positionnement transversalement au plan de séparation (43), s'écartant d'un mouvement du support de moule attribué (20).

6. Dispositif pour le moulage par soufflage de récipients (2), qui présente au moins un poste de soufflage (3) pour le formage d'ébauches thermoplastiques (1) en les récipients (2), dans lequel le poste de soufflage (3) est muni d'au moins deux segments de moule de soufflage maintenus par des supports de moule (19, 20), ainsi que dans lequel les segments de moule de soufflage sont disposés à l'état fermé du poste de soufflage (3), le long d'un plan de séparation (43) et sont fixés l'un par rapport à l'autre, avec au moins un élément de blocage (41), ainsi que dans lequel l'élément de blocage (41) est disposé de manière à pouvoir être positionné au moins transversalement au plan de séparation (43), **caractérisé en ce que** l'élément de blocage (41) est disposé, à l'état ouvert du poste de soufflage (3), de manière mobile sur un intervalle de distance entre les supports de moule (19, 20).

7. Dispositif selon la revendication 6, **caractérisé en ce que** l'élément de blocage (41) est disposé de manière à pouvoir balancer autour d'un axe de rotation essentiellement vertical.

8. Dispositif selon la revendication 6, **caractérisé en ce que** l'élément de blocage (41) est disposé de manière à pouvoir balancer autour d'un axe de rotation essentiellement horizontal.

9. Dispositif selon la revendication 6, **caractérisé en ce que** l'élément de blocage (41) est disposé de manière translatable transversalement au plan de séparation (43).

10. Dispositif selon une des revendications 6 à 9, **caractérisé en ce que** l'élément de blocage (41) est disposé au moins selon la zone, différemment du support attribué (20), de manière à pouvoir être positionné transversalement au plan de séparation (43).

11. Dispositif selon une des revendications 6 à 10, **caractérisé en ce que** l'élément de blocage (41) peut être positionné selon une courbe.
